# EUROPEAN PATENT APPLICATION

(11) **EP 2 730 777 A1**
(43) Date of publication of application: **14.05.2014**
(21) Application number: 12466019.2
(22) Date of filing: 08.11.2012
(51) Int. Cl.: F03B 11/02, F03B 7/00, F03B 1/00, H02K 7/18

(54) **Compact hydro power plant**

(71) Applicant: Moravsky Vyzkum, s.r.o., 70200 Ostrava-Moravska Ostrava (CZ); Haladova, Petra, 73937 Horni Bludovice (CZ)
(72) Inventor: Halada, Pavel, 73601 Havirov-Mesto (CZ); Haladova, Petra, 73937 Horni Bludovice (CZ)

(57) **Abstract**

The invention concerns a compact water power plant for smaller flows and larger gradient heights with a Pelton wheel, wherein in the stationary part (2) there is a cabinet (5) comprising a hollow generator stator (9) and in the space between the generator stator (9) and the cabinet (5) there is the rotor (4) comprising a hollow casing (10), which makes the closed system for the generator stator (9), while opposite to the sections (14) of the generator stator windings, on the inner surface of rotary parts (32) with a flange there are generator permanent magnets (35), while via a bottom flange (24) a water inlet nozzle (38) is connected with the cabinet (5). The water power plant can also be used with larger flows and smaller gradient heights by exchanging the pelton wheel with a water wheel and changing the water inlet position to the top flange (25).

## Description

### The Technology Area

The invention belongs to the area of small water power plants where there are constant demands for the operativeness of their installation, minimum weight, simple construction and links of turbine unit, including decreasing the prices.

### Current State of the Technology

When building small water power plants, it is common to work out their individual plans characterized with the specific parameters of the location, flow volume, gradient height as well as, in view of the specific parameters of the project requirements, design any construction changes of the basic version of the turbine unit.

Small water power plants are designed as a machine set of the turbine itself, axially connected mainly via clutch with a generator, while the machine set is firmly connected with the basic assembly and anchor frame. Currently neither in Europe, USA nor in other countries of the world there is no construction solution known in the area of the water power plants with the complete machine set, turbine and generator laid in one purpose-built monoblock that can be operatively installed in demanding natural conditions and generally in the conditions of high demands for the installation, with the high operational suitability of the whole development process and with considerable savings in comparison to the traditional water power plant solutions. Currently there are no prefabricated water power plants with such an universality effect allowing in their turbine part - using a simple and operative assemble procedure - to replace the Pelton wheel on the same axial shaft of the turbine with a system of special shape paddles allowing to use the turbine both for small and large gradients, with a simple exchange of the nozzle module on one side of the turbine cabinet, with blanking the input whole of the nozzle, behind the module of the input neck of the water from the gradient pipe, from the other side of the turbine cabinet.

### The Essence of the Invention

The above deficiencies are fully removed by creating a timeless structure of the universal compact water power plant, with a runner wheel laid in one monoblock of the turbine cabinet, and on one or both sides of it behind the separating walls of the cabinet there are also positioned, head-on and in one axis with the turbine wheel, one or two generators, on one or both sides of the turbine wheel so that it forms a monoblock of a complete water power plant, in one cabinet, operatively installable even in complicated natural and built-up environment, in universal construction for large gradients, using the Pelton turbine wheel and the nozzle system, and at the same time for small gradients by disabling the nozzle system and by replacing the spiral of the Pelton wheel paddles with a system of special shape paddles for small gradients on the same axial shaft of the turbine unit, and the idea is that this designed universal compact water power plant can be built, in comparison with the current systems of the traditional water power plants, with the high economic effect, and the substance of it is in the fact that in the stationary part there is a cabinet firmly connected with the frame and consisting of the right and left parts that are firmly connected in the dividing plane, while in the cabinet there is the generator stator and its hollow case in the axis is firmly connected on both sides in the cabined using the fastened flanges and springs, while in the extension of the hollow case there are two sections of the stator winding of the generator laid and their power cables are led through the hollow case outside via the power electrical connection with the return cable of the power current, while inside the stator of the generator there is the integrated partial control electronics of the generator that is connected withe resolver winding firmly connected with one of the side flanges of the cabinet and furthermore it is connected with the light-current connector via the connecting cables of the control electronics, while the light-current connector is the ending of the control electronics cable, while in one circumferential inclined side wall of the cabinet there is a bottom flange built in and furthermore in the top rounded part of the cabinet there is a top flange blinded with a lid and further on the sides in the axial part of the cabinet on its opposite ends there are hollow extensions of rotational shape with an inner shoulder and outer thread, in which there are fillings that are pressed by nuts and they are secured with locking nuts, while inside the stationary part in the space between the generator stator and the cabinet there is the rotor laid in a rotary manner in bearings and on a hollow casing, and the rotor consists of two pot-like rotary parts with flanges and between them, clamped by screw joints, there is the Pelton runner wheel which makes the closed system for the generator stator, while opposite to the sections of the generator stator windings, on the inner surface of rotary parts with a flange there are generator permanent magnets attached and on the axial opposite ends there are splashing rings as part of the rotor, and on one of them, opposite to the resolver windings, there are resolver permanent magnets attached, while above the splashing rings and the fillings there are covers on both sides connected with the installed flanges and in the sides of the cabinet there are thread wholes, sealed with blinding screws, while via the bottom flange the nozzle is firmly connected with the cabinet, and on its other end there is a connecting flange of the water inlet by the nozzle.

In the next solution the mentioned deficiencies are mostly removed by creating a construction of a compact water power plant for larger flows and smaller gradient height with a water wheel made of stationary part firmly connected with the base frame and non-stationary part consisting of rotor - the substance of it is in the fact that in the stationary part there is a cabinet firmly connected with the frame and consisting of the right and left parts that are firmly connected in the dividing plane, while in the cabinet there is the generator stator_and its hollow case in the axis is firmly connected on both sides in the cabined using the fastened flanges and springs,
while in the extension of the hollow case there are two sections of the stator winding of the generator laid and their power cables are led through the hollow case outside via the power electrical connection with the return cable of the power current, while inside the stator of the generator there is the integrated partial control electronics of the generator that is connected with resolver winding firmly connected with one of the side flanges of the cabinet and furthermore it is connected with the light-current connector via the connecting cables of the control electronics, while the light-current connector is the ending of the control electronics cable, on the sides in the axial part of the cabinet 5 on its opposite ends there are hollow extensions of rotational shape with an inner shoulder and outer thread, in which there are fillings that are pressed by nuts and they are secured with locking nuts, while the whole for the nozzl is closed with a blinding, while in one circumferential inclined side wall of the cabinet there is a bottom flange built in, while in the top rounded part of the cabinet the flange is equipped with an inlet fitting made of an inlet part with a rectangular input flange followed by a transitional part rectangle-square against the flow of the water, and furthemore there is a top inlet fitting ended with a transitional part square-circle with an input circular flange, while inside the stationary part in the space between the generator stator and the cabinet there is the rotor laid in a rotary manner in bearings and on a hollow casing, and the rotor consists of two pot-like rotary parts with flanges and between them, clamped by screw joints, there is the runner water wheel which makes the closed system for the generator stator, while between the flanges of the inlet part and transitional part rectangle-square there is a swinging flap with a shaft in sliding casings and it is controlled by rotational drive fixed on halves of the flanges of the inlet part and transitional part rectangle-square of the top inlet fitting, while opposite to the sections of the generator stator windings, on the inner surface of rotary parts with a flange there are generator permanent magnets attached and on the axial opposite ends there are splashing rings as part of the rotor, and on one of them, opposite to the resolver windings, there are resolver permanent magnets attached, while above the splashing rings and the fillings there are covers on both sides connected with the installed flanges and in the sides of the cabinet there are thread wholes, sealed with blinding screws, fixing the shape filling.

The compact water power plant is designed as a self-contained sub-set suitable for a quick use, allowing the benefits of working out only a simple foundation, inlet pipe and drainage system. Therefore, it is advantageous to use the above compact solution with an electronic control system inside, and furthermore the compact power plant needs to be connected only with the consumer grid and control system with a servo amplifier. It is spatially less demanding device in comparison with the classical arrangement, plus very simple installation.

### Overview of Figures on the Drawings

The attached sheets contain figures and legend.

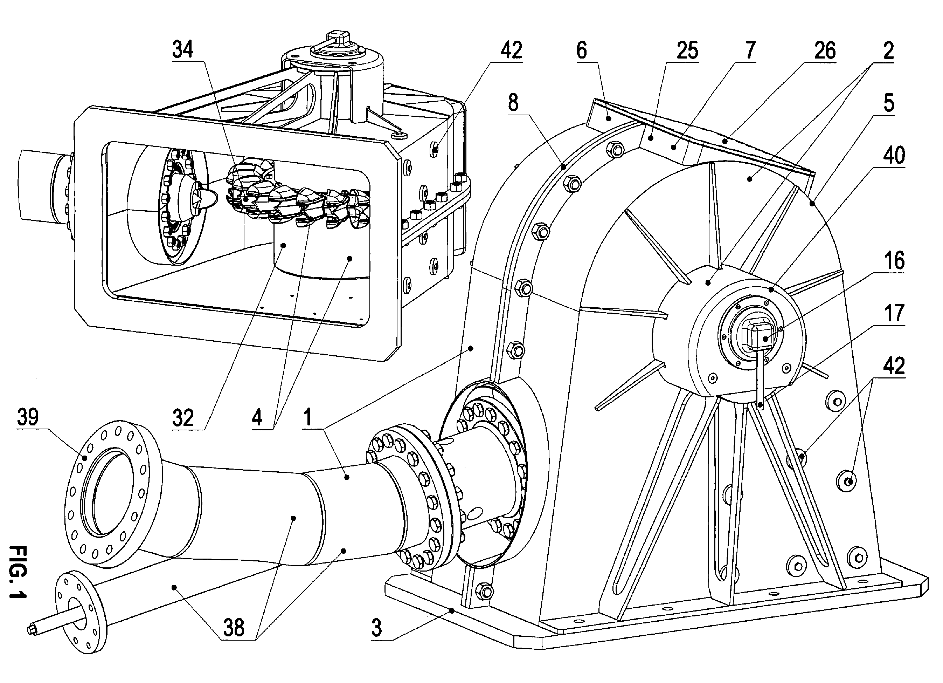

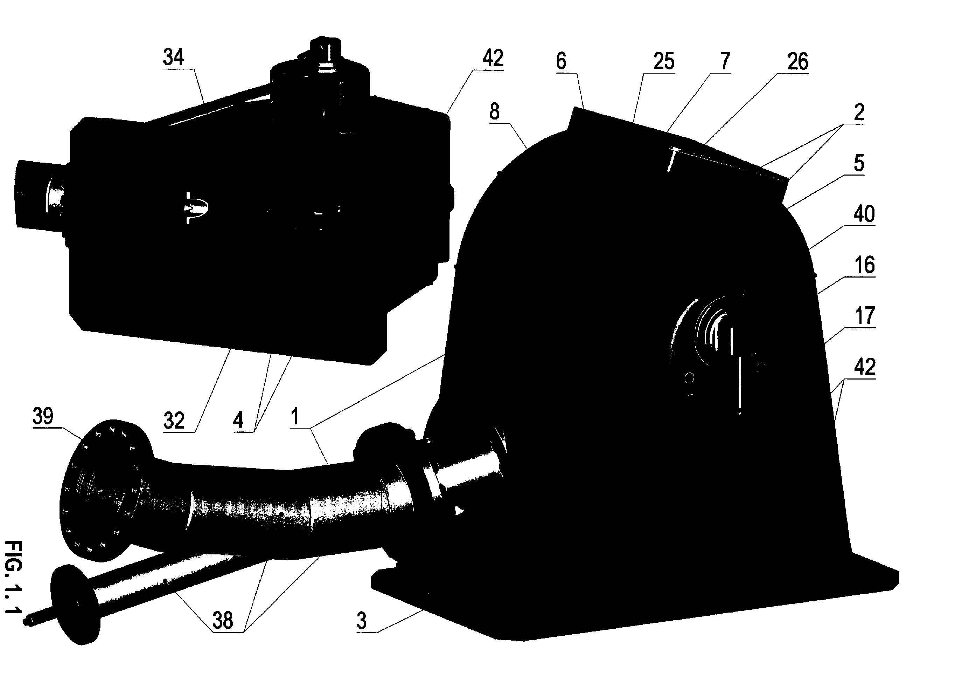

The figure for annotation contains the axonometric view of the compact water power plant
- FIG. 1: The axonometric view of the compact water power plant

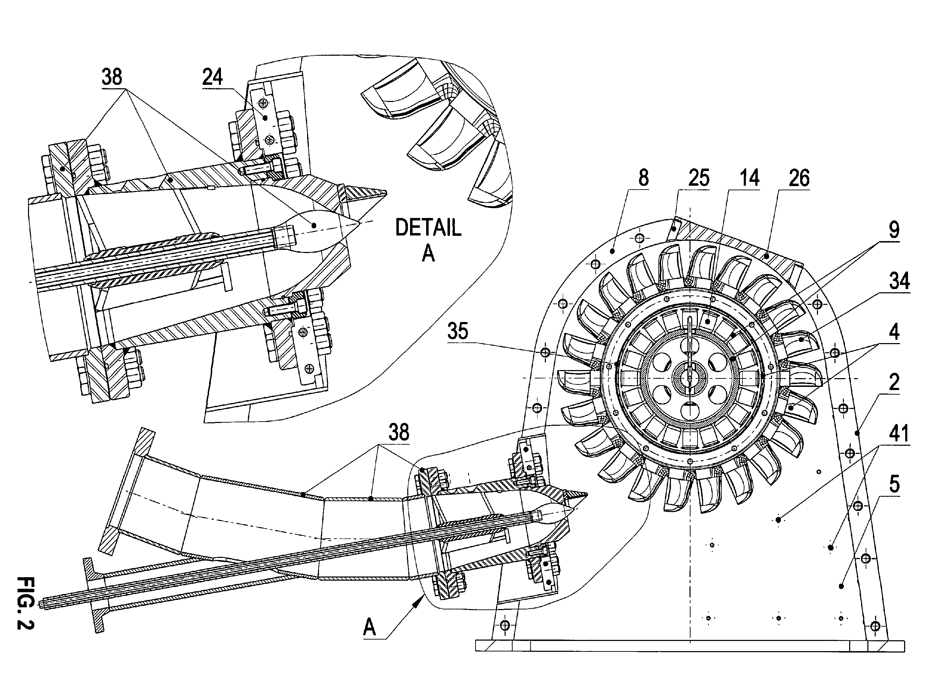

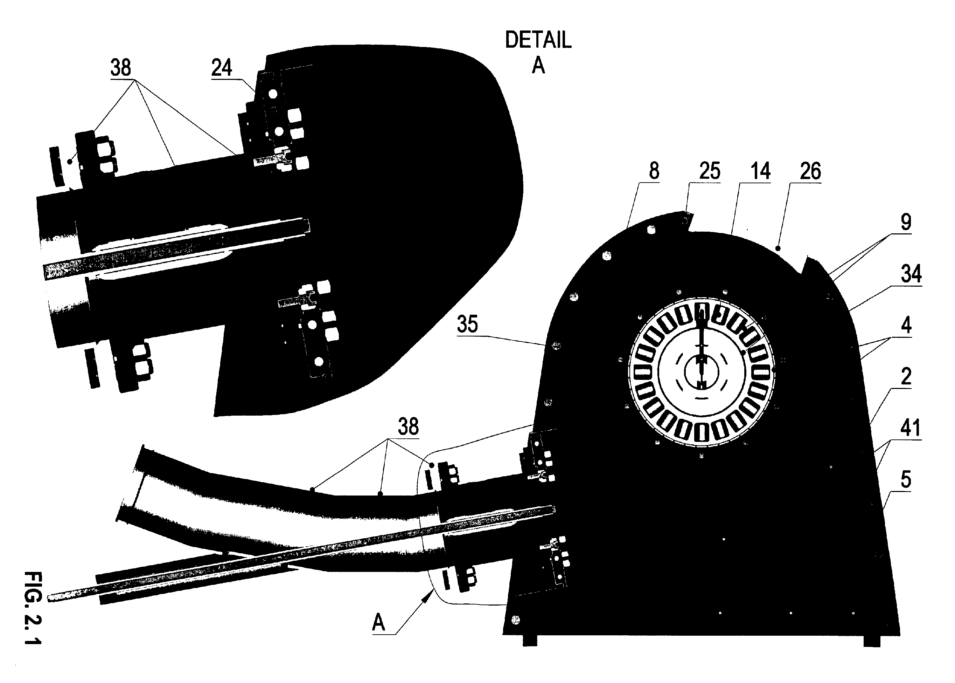

- FIG. 2: The sectional view of the compact water power plant including a detail of the sectional view of the nozzle

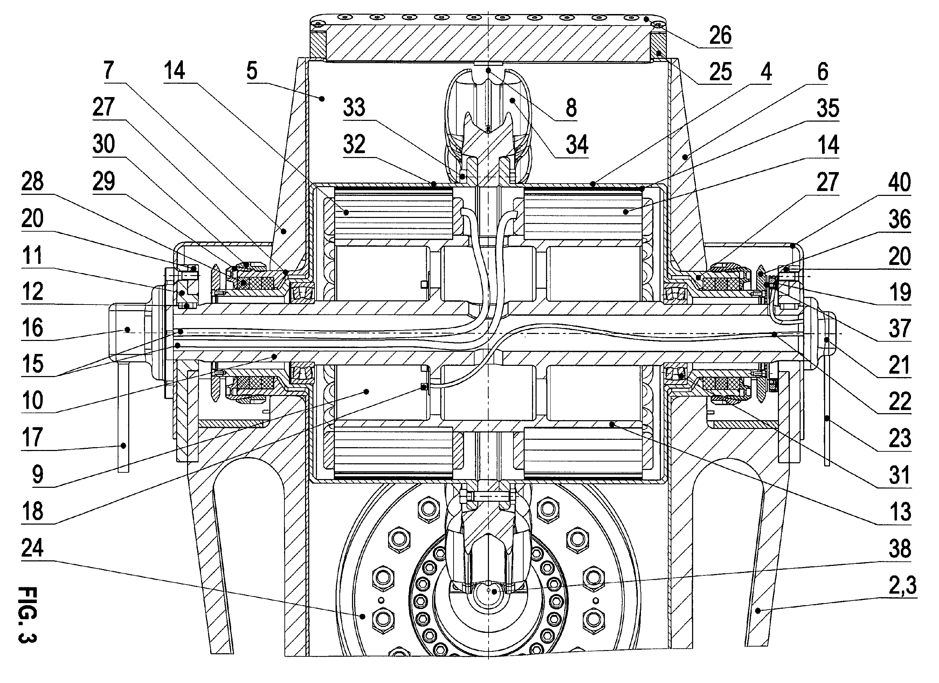

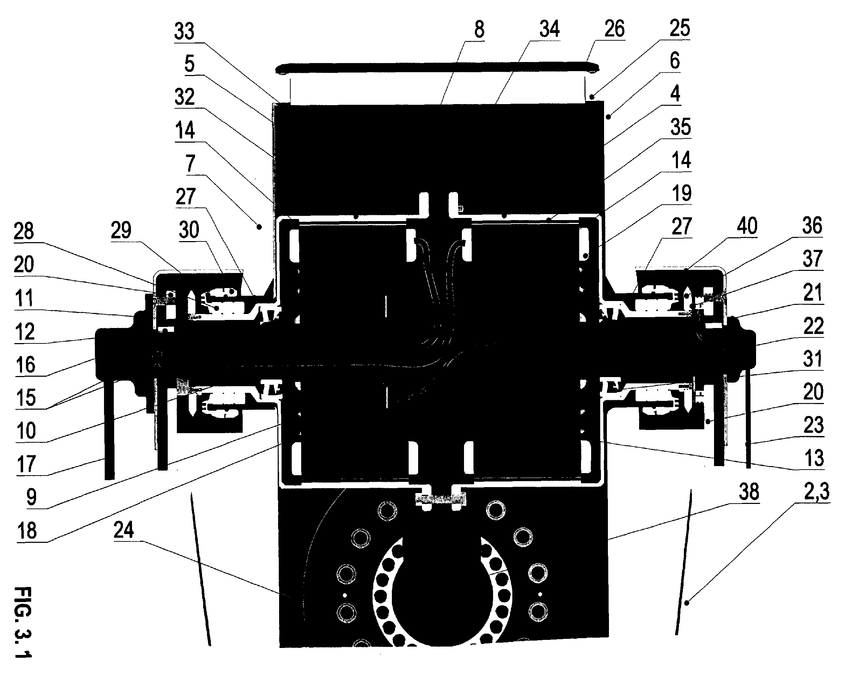

- FIG. 3: The sectional view of the compact water power plant

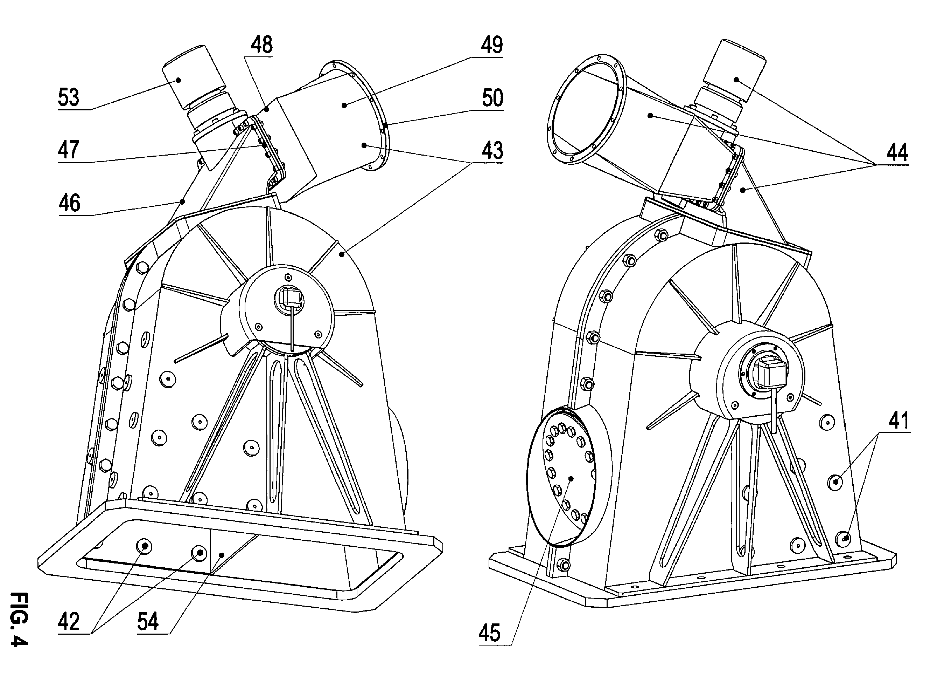

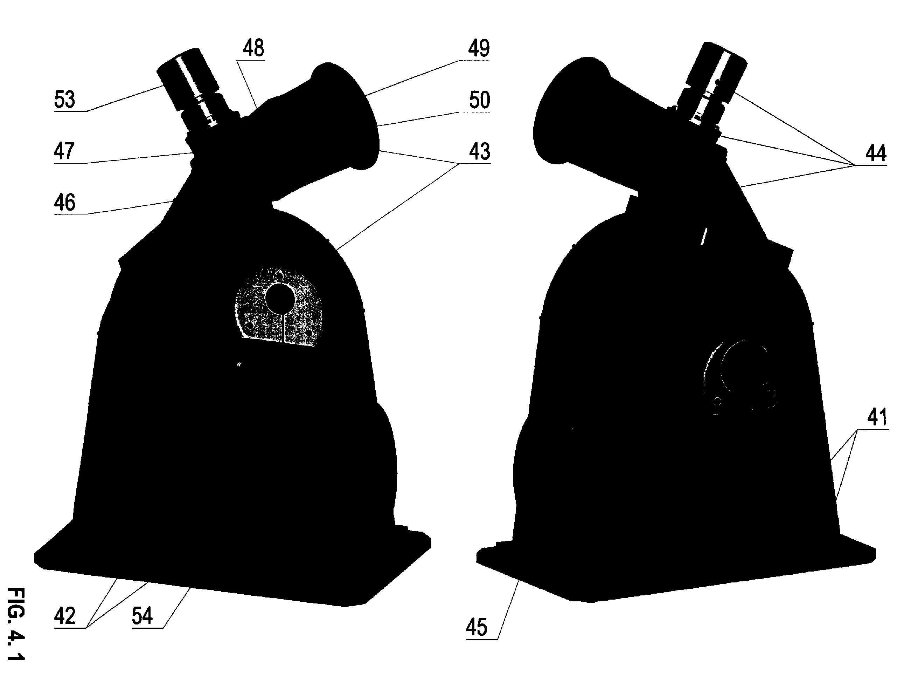

- FIG. 4: The axonometric view of the compact water power plant

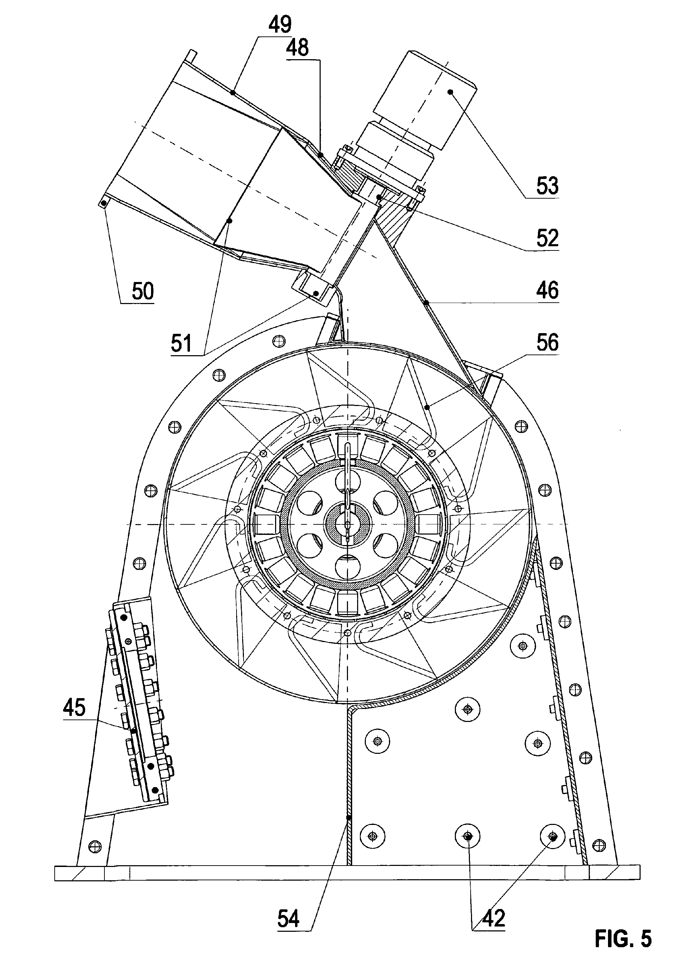

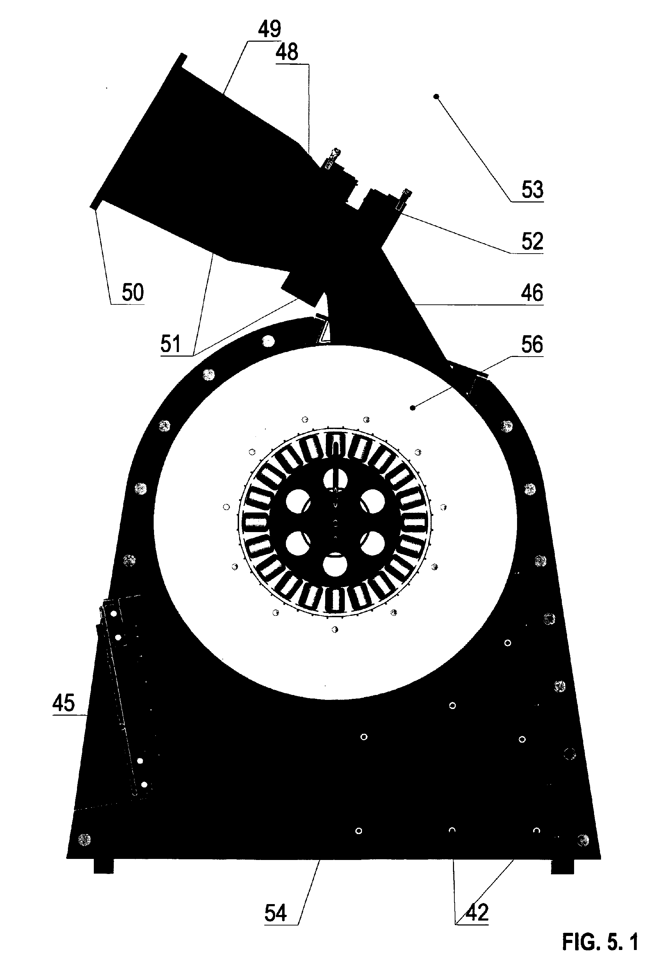

- FIG. 5.: The sectional view of the compact water power plant - side view

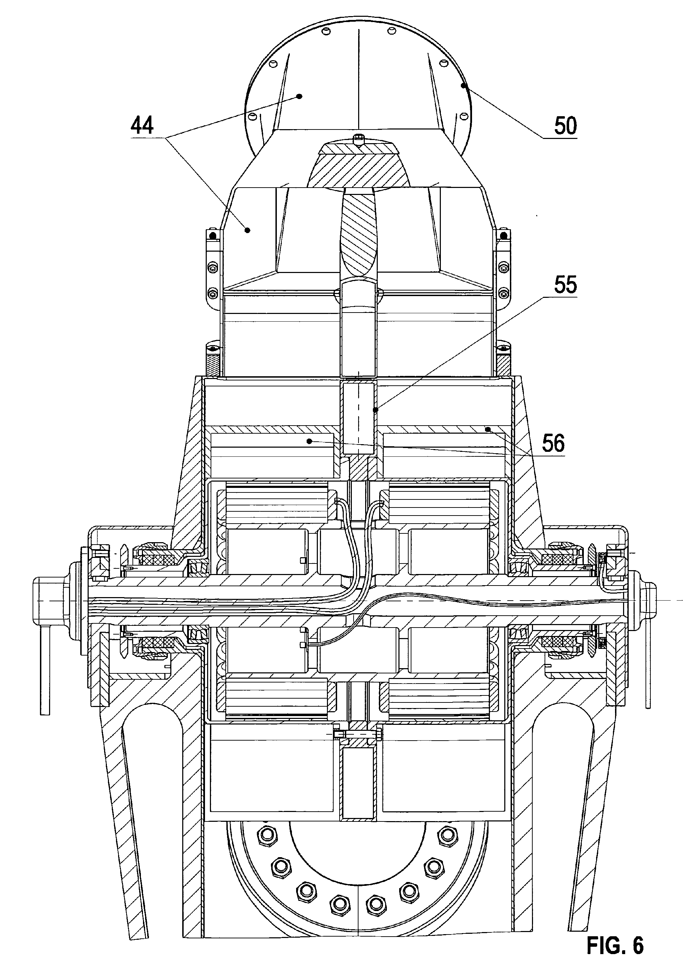

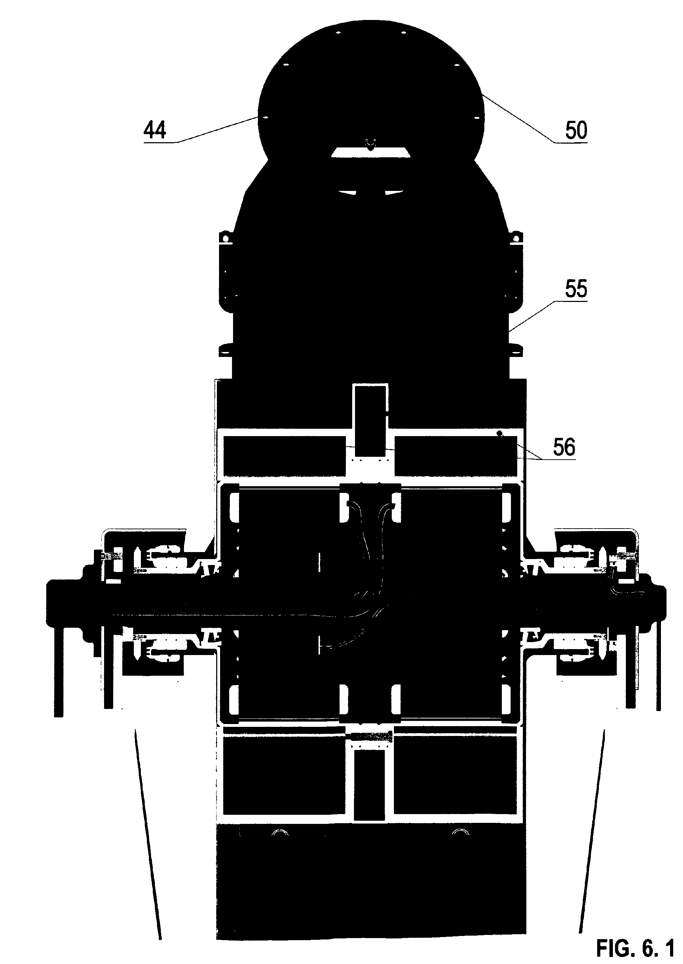

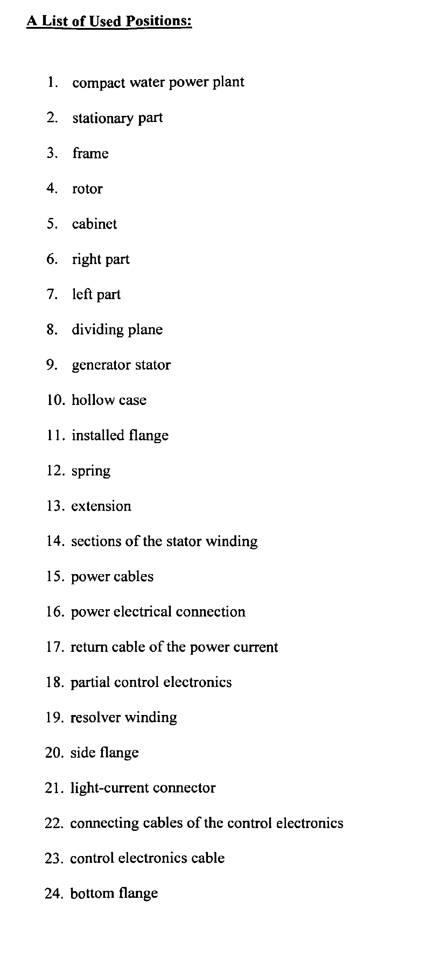

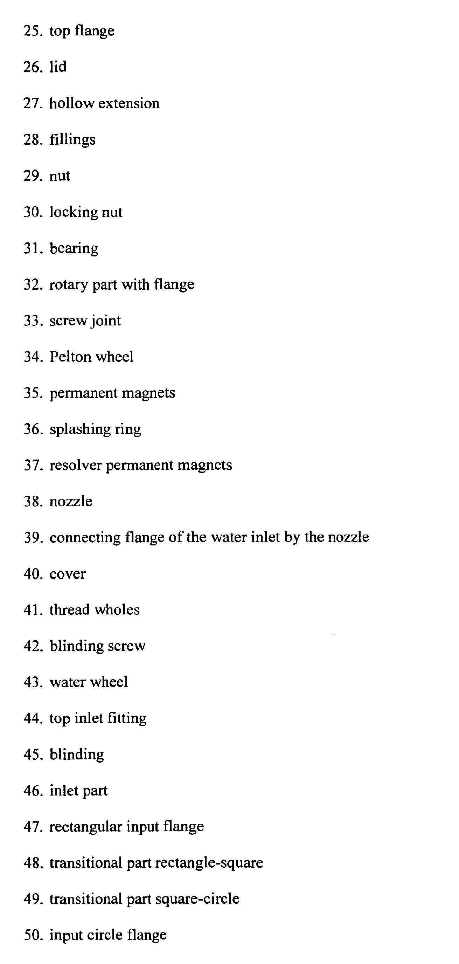

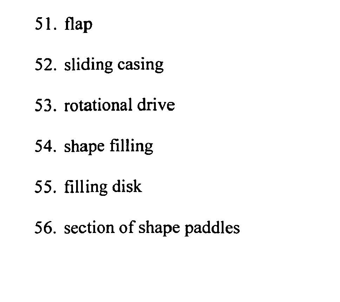

- FIG. 6: The detail axial sectional view of the compact water power plant

### An example of the invention variant

The compact water power plant 1 for smaller flows and larger gradient height with the Pelton wheel consists of the stationary part 2 firmly connected with the base frame 3 and non-stationary part consisting of rotor 4 - in the stationary part 2 there is a cabinet 5 firmly connected with the frame 3 and consisting of the right 6 and left parts 7, that are firmly connected in the dividing plane 8, while in the cabinet 5 there is the generator stator 9 and its hollow case 10 in the axis is firmly connected on both sides in the cabinet 5 using the fastened flanges 11 and springs 12, while in the extension 13 of the hollow case 10 there are two sections of the stator winding 14 of the generator laid and their power cables 15 are led through the hollow case 10 outside via the power electrical connection 16 with the return cable 17 of the power current, while inside the stator 9 of the generator there is the integrated partial control electronics 18 of the generator that is connected with resolver winding 19 firmly connected with one of the side flanges 20 of the cabinet and furthermore it is connected with the light-current connector 21 via the connecting cables 22 of the control electronics, while the light-current connector 21 is the ending of the control electronics cable 23, while in one circumferential inclined side wall of the cabinet 5 there is a bottom flange 24 built in and furthermore in the top rounded part of the cabinet 5 there is a top flange 25 blinded with a lid 26 and further on the sides in the axial part of the cabinet 5 on its opposite ends there are hollow extensions 27 of rotational shape with an inner shoulder and outer thread, in which there are fillings 28 that are pressed by nuts 29 and they are secured with locking nuts 30, while inside the stationary part 2 in the space between the generator stator 9 and the cabinet 5 there is the rotor 4 laid in a rotary manner in bearings 31 and on a hollow casing 10, and the rotor consists of two pot-like rotary parts 32 with flanges and between them, clamped by screw joints 33, there is the Pelton runner wheel 34 which makes the closed system for the generator stator 9, while opposite to the sections 14 of the generator stator windings, on the inner surface of rotary parts 32 with a flange there are generator permanent magnets 35 attached and on the axial opposite ends there are splashing rings 36 as part of the rotor 4, and on one of them, opposite to the resolver windings 19, there are resolver permanent magnets 37 attached, while above the splashing rings 36 and the fillings 28 there are covers 40 on both sides connected with the installed flanges 11 and in the sides of the cabinet 5 there are thread wholes 41, sealed with blinding screws 42, while via the bottom flange 24 the nozzle 38 is firmly connected with the cabinet 5, and on its other end there is a connecting flange 39 of the water inlet by the nozzle 38.

In the described variant the compact water power plant 1 is designed as the Pelton turbine and is designed so that it may be easily alternatively changed into the water wheel 43 while keeping the basic sub-sets and most of the components.

The main and substantial change is in the cabinet 5 which is a replacement of the Pelton wheel 34 by a filling wheel 55 and an attachment of two sections of shape paddles 56 on the rotary part with a flange 32 of the rotor 4.

The compact water power plant for bigger flows and smaller gradient heights with the water wheel consists of the stationary part 2 firmly connected with the base frame 3 and non-stationary part consisting of rotor 4 - in the stationary part2 there is a cabinet 5 firmly connected with the frame 3 and consisting of the right 6 and left parts 7, that are firmly connected in the dividing plane 8, while in the cabinet 5 there is the generator stator 9 and its hollow case 10 in the axis is firmly connected on both sides in the cabinet 5 using the fastened flanges 11 and springs 12, while in the extension 13 of the hollow case 10 there are two sections of the stator winding 14 of the generator laid and their power cables 15 are led through the hollow case 10 outside via the power electrical connection 16 with the return cable 17 of the power current, while inside the stator 9 of the generator there is the integrated partial control electronics 18 of the generator that is connected withe resolver winding 19 firmly connected with one of the side flanges 20 of the cabinet and furthermore it is connected with the light-current connector 21 via the connecting cables 22 of the control electronics, while the light-current connector 21 is the ending of the control electronics cable 23, while on the sides in the axial part of the cabinet 5 on its opposite ends there are hollow extensions 27 of rotational shape with an inner shoulder and outer thread, in which there are fillings 28 that are pressed by nuts 29 and they are secured with locking nuts 30, while the whole for the nozzle is closed with a blinding 45, while in one circumferential inclined side wall of the cabinet 5 there is a bottom flange 24 built in, while in the top rounded part of the cabinet 5 the flange 25 is equipped with an inlet fitting 44, made of an inlet part 46 with a rectangular input flange 47 followed by a transitional part rectangle-square 48 against the flow of the water, and furthermore there is a top inlet fitting 44 ended with a transitional part square-circle 49 with an input circular flange 50, while inside the stationary part 2 in the space between the generator stator 9 and the cabinet 5 there is the rotor 4 laid in a rotary manner in bearings 31 and on a hollow casing 10, and the rotor consists of two pot-like rotary parts 32 with flanges and between them, clamped by screw joints 33 there is the runner water wheel 43 which makes the closed system for the generator stator 9 while between the flanges of the inlet part 46 and transitional part rectangle-square 48 there is a swinging flap with a shaft 51 in sliding casings 52 and it is controlled by rotational drive 53 fixed on halves of the flanges of the inlet part 46 and transitional part rectangle-square 48 of the top inlet fitting 44, while opposite to the sections 14 of the generator stator windings, on the inner surface of rotary parts 32 with a flange there are generator permanent magnets 35 and on the axial opposite ends there are splashing rings 36 as part of the rotor 4, and on one of them, opposite to the resolver windings 19, there are resolver permanent magnets 37 attached, while above the splashing rings 36 and the fillings 28 there are covers 40 on both sides connected with the installed flanges 11 and in the sides of the cabinet 5 there are thread wholes 41, with blinding screws 42, while the blinding screws 42 are opposite to the thread wholes 41 and fix the shape filling 54.

### Functions

The compact water power plant 1 is designed so that it suits in a certain range universally for rather wide spectrum of flows and gradient heights which is met by its mechanically-technological variability and the variability with respect to connections to the grid must be then assured by the sophisticated electronics as an integral part of the equipment. Mechanically-technological variability is based on the possibility to assemble the equipment in the form of a compact water power plant 1 with the Pelton wheel for smaller flows and larger gradient heights or as an alternative with the water wheel 43 for larger flows and smaller gradient heights.

The machine set of the compact water power plant 1 with the Pelton wheel 34 consists of the stationary part 2, firmly connected with the frame 3 and the rotor 4. The basis of the stationary part 2 is a cabinet 5 consisting of the right 6 and left parts 7 that are axially symmetrical with respect to its vertical dividing plane 8. Inside the cabinet 5 there is the stator of the generator 9 that has a hollow case 10 in the axial area connected with the cabinet 5 in its ends after the axial installation of two attached flanges 11 making the centring of the stator of the generator 9 and there are two springs 12 placed preventing any turns. On the hollow case 10 there is a rotational extension 13 carrying two sections of the stator winding 14, symmetrically according to the vertical dividing plane 8, and from the the power cables 15 lead to the power electrical connection 16 from where the return cable 17 of the power current comes out. In the area of the extension 13 there is the partial control electronics 18, connected with resolver winding 19, firmly connected with one of the side flanges 20, via the connecting cables 22 of the control electronics with the light-current connector 21, from which the control electronics cable 23 comes out. In the lower part of the circumference of the cabinet 5 there is the bottom flange 24 and in the top part there is the top flange 25 blinded with a lid 26 copying the inner shape of the cabinet 5. Both from the right 6 and left parts 7 of the cabinet 5 there are two hollow rotational extensions 27 stemming out axially, with fillings 28 leaning against their shoulders. In order to assure their correct function they are pressed by nuts 29 and secured with locking nuts 30.

Between the generator stator 9 and the cabinet 5 there is the rotor 4 laid in rolling way in bearings 31 laid on the hollow cases 10 of the generator stator 9. The rotor 4 consists of two rotational parts with a flange 32 of pot-like shape and between their flanges there is clamped by screw joints 33 the Pelton wheel 34. On the inner rotational surfaces of the rotational parts with a flange 32 in the pot-like parts there are permanent magnets 35 attached. On both ends of the rotor 4 the right part 6 and the left part 7 there are splashing rings 36 firmly connected with them. On one of the splashing rings 36 the resolver permanent magnets 37 are attached and opposite to them on one of the side flanges 20 of the cabinet 5 there is the resolver windings 19. To the bottom flange 24 of the cabinet 5 there is attached the last bigger sub-set of the compact water power plant 1 with the Pelton wheel, that is the nozzle 38, and on its other end there is a connecting flange of the water inlet by the nozzle 39. The splashing rings 36, that will work only exceptionally, with the fillings 28 are protected by covers 40.

On the sides and in the circumferential part of the cabinet 5 there are thread wholes 41 with blinding screws 42 and they serve for the alternative variant of the compact water power plant 1 of the water wheel 43.

With this variant, the following arrangements need to be made:
instead of the nozzle 38 in the lower part of the cabinet 5 a blinding 45 is attached to the bottom flange 24, in the top part of the cabinet 5 instead of the lid 26 a top inlet fitting 44 is installed consisting of of an inlet part 46 connected with the cabinet 5 via a flange and ended with a rectangular input flange 47. This part us followed by a transitional part rectangle-square 48 against the flow of the water, and the string of following components ends with a transitional part square-circle 49 with an input circular flange 50 for the input water pipe. Between the inlet part 46 and the rectangular input flange 47 in sliding casings 52 there is a flap 51 controlled by rotational drive 53 connected via a flange with the inlet part 46 and the rectangular input flange 47. The mentioned alternative variant also requires putting a shape filling 54 to the cabinet 5 with blinding screws 42 using the thread wholes 41. To complete the alternative variant, it only takes to replace the Pelton wheel 34 with a filling disk 55 and on the circumferential surfaces of each of the rotational parts with the flange 32 of the rotor 4 install a section of shape paddles 56.

### Industrial Use

The compact water power plant can be used anywhere where there is a lack of space, necessary quick implementation of the construction and where only simple foundations can be built, bring input pipes and connection with the water source and with the power consumer electrical circuit and control electronics with accumulators. Thanks to the electronics and simple variable mounting conversion the compact power plant can be used of such a flow and gradient height that are in a wide range of usage.

## Claims

1. The compact water power plant (1) for smaller flows and larger gradient heights with the Pelton wheel consisting of the stationary part (2) firmly connected with the base frame (3)
and non-stationary part consisting of rotor (4), **characteristic by the following:**
in the stationary part (2) there is a cabinet (5) firmly connected with the frame (3) and consisting of the right (6) and left parts (7), that are firmly connected in the dividing plane (8), while in the cabinet (5) there is the generator stator (9) and its hollow case (10) in the axis is firmly connected on both sides in the cabinet (5) using the fastened flanges (11) and springs (12), while in the extension (13) of the hollow case (10) there are two sections of the stator winding (14) of the generator laid and their power cables (15) are led through the hollow case (10) outside via the power electrical connection (16) with the return cable (17) of the power current, while inside the stator (9) of the generator there is the integrated partial control electronics (18) of the generator that is connected withe resolver winding (19) firmly connected with one of the side flanges (20) of the cabinet and furthermore it is connected with the light-current connector (21) via the connecting cables (22) of the control electronics, while the light-current connector (21) is the ending of the control electronics cable (23), while in one circumferential inclined side wall of the cabinet (5) there is a bottom flange (24) built in and furthermore in the top rounded part of the cabinet (5) there is a top flange (25) blinded with a lid (26) and further on the sides in the axial part of the cabinet (5) on its opposite ends there are hollow extensions (27) of rotational shape with an inner shoulder and outer thread, in which there are fillings (28) that are pressed by nuts (29) and they are secured with locking nuts (30), while inside the stationary part (2) in the space between the generator stator (9) and the cabinet (5) there is the rotor (4) laid in a rotary manner in bearings (31) and on a hollow casing (10), and the rotor consists of two pot-like rotary parts (32) with flanges and between them, clamped by screw joints (33), there is the Pelton runner wheel (34) which makes the closed system for the generator stator (9), while opposite to the sections (14) of the generator stator windings, on the inner surface of rotary parts (32) with a flange there are generator permanent magnets (35) attached and on the axial opposite ends there are splashing rings (36) as part of the rotor (4), and on one of them, opposite to the resolver windings (19), there are resolver permanent magnets (37) attached, while above the splashing rings (36) and the fillings (28) there are covers (40) on both sides connected with the installed flanges (11) and in the sides of the cabinet (5) there are thread wholes (41), sealed with blinding screws (42), while via the bottom flange (24) the nozzle (38) is firmly connected with the cabinet (5), and on its other end there is a connecting flange (39) of the water inlet by the nozzle (38).

2. The compact water power plant for larger flows and smaller gradient heights with a water wheel consisting of the stationary part (2) firmly connected with the base frame (3) and non-stationary part consisting of rotor (4), **characteristic by the following:**
in the stationary part (2) there is a cabinet (5) firmly connected with the frame (3) and consisting of the right (6) and left parts (7), that are firmly connected in the dividing plane (8), while in the cabinet (5) there is the generator stator (9) and its hollow case (10) in the axis is firmly connected on both sides in the cabinet (5) using the fastened flanges (11) and springs (12), while in the extension (13) of the hollow case (10) there are two sections of the stator winding (14) of the generator laid and their power cables (15) are led through the hollow case (10) outside via the power electrical connection (16) with the return cable (17) of the power current, while inside the stator (9) of the generator there is the integrated partial control electronics (18) of the generator that is connected with resolver winding (19) firmly connected with one of the side flanges (20) of the cabinet and furthermore it is connected with the light-current connector (21) via the connecting cables (22) of the control electronics, while the light-current connector (21) is the ending of the control electronics cable (23), on the sides in the axial part of the cabinet (5) on its opposite ends there are hollow extensions (27) of rotational shape with an inner shoulder and outer thread, in which there are fillings (28) that are pressed by nuts (29) and they are secured with locking nuts (30), while the whole for the nozzle (38) is closed with a blinding (45), while in one circumferential inclined side wall of the cabinet (5) there is a bottom flange (24) built in, while in the top rounded part of the cabinet (5) the flange (25) is equipped with an inlet fitting (44), made of an inlet part (46) with a rectangular input flange (47) followed by a transitional part rectangle-square (48) against the flow of the water, and furthermore there is a top inlet fitting (44) ended with a transitional part square-circle (49) with an input circular flange (50), while inside the stationary part (2) in the space between the generator stator (9) and the cabinet (5) there is the rotor (4) laid in a rotary manner in bearings (31) and on a hollow casing (10), and the rotor consists of two pot-like rotary parts (32) with flanges and between them, clamped by screw joints (33) there is the runner water wheel (43) which makes the closed system for the generator stator (9), while between the flanges of the inlet part (46) and transitional part rectangle-square (48) there is a swinging flap with a shaft (51) in sliding casings (52) and it is controlled by rotational drive (53) fixed on halves of the flanges of the inlet part (46) and transitional part rectangle-square (48) of the top inlet fitting (44), while opposite to the sections (14) of the generator stator windings, on the inner surface of rotary parts (32) with a flange there are generator permanent magnets (35) and on the axial opposite ends there are splashing rings (36) as part of the rotor (4), and on one of them, opposite to the resolver windings (19), there are resolver permanent magnets (37) attached, while above the splashing rings (36) and the fillings (28) there are covers (40) on both sides connected with the installed flanges (11) and in the sides of the cabinet (5) there are thread wholes (41), sealed with blinding screws (42), fixing the shape filling (54).
